# EUROPEAN PATENT SPECIFICATION

(11) **EP 1 530 352 B1**
(45) Date of publication and mention of the grant of the patent: **05.09.2012**
(21) Application number: 04022193.9
(22) Date of filing: 17.09.2004
(51) Int. Cl.: H04M 1/725, H04M 3/56

(54) **A mobile station and a method for controlling the mobile station in conferencing mode for use in mobile communication system**
Mobilstation und Verfahren zur Regelung der Mobilstation im Konferenzmodus, zur Verwendung in einem Mobilkommunikationssystem.
Station mobile et méthode pour sa gestion en mode conférence dans un système de communications mobiles.

(30) Priority: 06.11.2003 KR 2003078290
(43) Date of publication of application: 11.05.2005
(73) Proprietor: Samsung Electronics Co., Ltd., Suwon-si, Gyeonggi-do 442-742 (KR)
(72) Inventor: Lee, Ju-Beam, Yeongtong-gu Suwon-si Gyeonggi-do (KR)
(74) Representative: Grünecker, Kinkeldey, Stockmair & Schwanhäusser

(56) References cited:
- US-A1- 2003 073 430
- US-B1- 6 219 415
- US-B1- 6 304 648

## Description

The present invention relates to a mobile communication system, and more particularly to a conference call service for use in the mobile communication system.

Presently, mobile communication systems have provided a conference call service or a multipoint communication service (hereinafter referred to as a "conference call"). In a case where a plurality of users desire to establish a call connection state with parties they called using their mobile terminals, the conference call service enables the users to enter a call ready state at the same time. Typically, a user transmits to the mobile communication system a predetermined code for requesting a conference call from a mobile communication system and a second conference party's phone number, such that he or she can establish a call connection state with the second conference party while establishing a call connection state with a first conference party. If the second conference party answers the user's request, then the user can communicate with the first and second conference parties at the same time. Provided that the user desires to further increase the number of conference parties in the above discussed conference call state established with the first and second conference parties, there is a need for the mobile communication system to transmit only the newly-desired party's phone number.

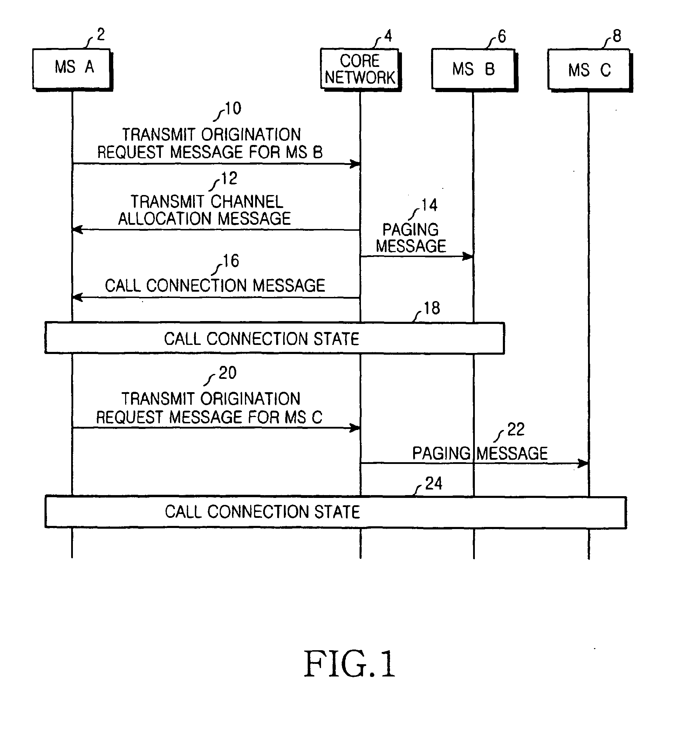

Fig. 1 is a flow chart illustrating operations of messages needed to provide the conventional mobile communication system with a conference call service. Referring to Fig. 1, in step 10 the mobile station (MS) A (2) transmits an origination request message associated with an MS B (6) to a core network 4. In step 12, the core network 4 transmits a channel allocation message to the MS A (2) so as to create a channel, and in step 14, transmits a paging message to the MS B (6). If the MS B (6) answers a termination message transmitted via the paging message, in step 16, the core network 4 transmits a call connection message to the MS A (2) and creates a traffic channel between the MS A (2) and the MS B (6) at step 18. If in step 20 the MS A (2) transmits an origination request message associated with the MS C (8) to provide a conference call service, in step 22 the core network 4 transmits an origination request message associated with the MS C (8). If the MS C (6) answers a termination message transmitted via the paging message, in step 24 the core network 4 transmits a call connection message to the MS A (2) and creates a traffic channel among the MS A (2), the MS B (6) and the MS C (8). If the conference call service is provided, the core network 4 switches the traffic channel among the MSs A (2), B (6) and C (8) so that it is possible to implement multiple access.

However, no additional message is defined between the core network 4 and the MSs 2, 6 and 8 in the conference call service, such that it is impossible for the MSs 2, 6 and 8 joining in multiple conversations to recognize current states of their counterpart MSs. Therefore, each MS receives a predetermined tone message from the core network 4 only when a call connection mode between the MS and its counterpart MS is broken, so that it informs a user of the broken call connection.

US 2003/0073430 A1 refers to a user interface technique for managing an active call. In particular, this document relates to a method of managing a conference call on a handheld mobile telephone device. The described method includes the steps of displaying to a user a screen including a new call option initiating a first call at the request of a user, and the placing of a first call on hold at the request of a user and placing an indicator representative of the first call in a hold section of the display. The method further includes the steps of displaying to a user an available section of the display including a new call option, initiating a second call at the request of a user by selecting the new call option and placing an indicator representative of the second call in an active section of the display.

Therefore, the present invention has been made in view of the above problems.

It is the object of the present invention to provide an improved method for easily recognizing state information of at least one counterpart mobile station in a mobile communication system, and the mobile communication system for use with the method.

This object is solved by the subject matter of the independent claims.

Preferred embodiments are defined in the dependent claims.

In accordance with the present invention, the above object can be accomplished by the provision of a mobile station (MS) for establishing a conference call mode with at least one counterpart mobile station, comprising: a controller for determining whether there is provided a predetermined state where the MS must unconditionally inform the counterpart MSs of specific state information during a conference call, and transmitting the specific state information to the counterpart MSs when the predetermined state has been provided; and a display for displaying a variety of messages upon receiving a control signal from the controller.

The above features and other advantages of the present invention will be more clearly understood from the following detailed description taken in conjunction with the accompanying drawings, in which:
Fig. 1 is a flow chart illustrating operations providing a conventional mobile communication system with a conference call service;
Fig. 2 is a block diagram illustrating a mobile communication system in accordance with a preferred embodiment of the present invention;
Fig. 3 is a block diagram illustrating a mobile terminal (also called a mobile station) in accordance with a preferred embodiment of the present invention;
Fig. 4 is a flow chart illustrating operations for communicating between a core network and the MSs during a conference call in accordance with a preferred embodiment of the present invention;
Fig. 5 is a flow chart illustrating operations of the MSs during a conference call in accordance with a preferred embodiment of the present invention; and
Fig. 6 is a flow chart illustrating operations of MSs during a conference call in accordance with another preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

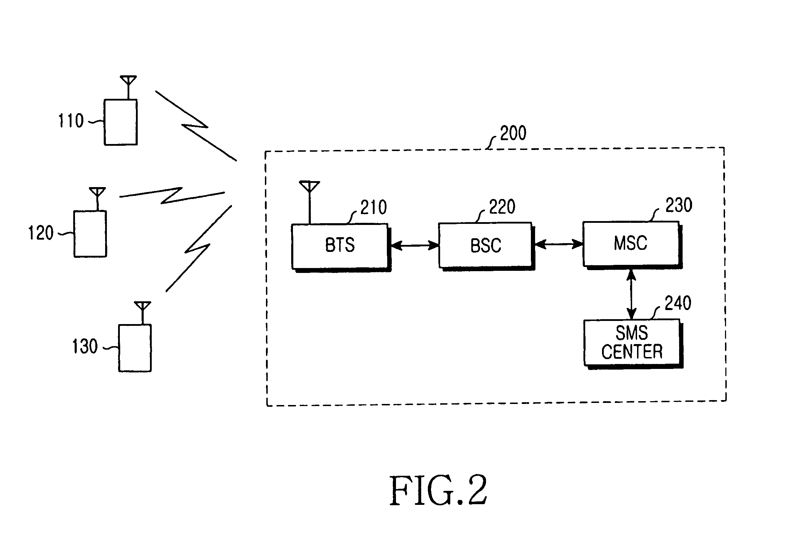

Fig. 2 is a block diagram illustrating a mobile communication system in accordance with a preferred embodiment of the present invention. Referring to Fig. 2, mobile stations (MSs) 110, 120 and 130 are wirelessly connected to a BTS (Base Transmit Subsystem) 210. Upon receiving a termination call for the MSs 110, 120 and 130 contained in a corresponding service area from a BSC (Base Station Controller) 220, the BTS 210 transmits the received termination call to the MSs 110, 120 and 130. Upon receiving an origination call from the MSs, the BTS 210 transmits the received origination call to the BSC 220. The BSC 220 performs overall call processing operations, for example, a voice call, a circuit call, and packet call, etc. The BSC 220 performs signaling with an MSC (Mobile Station Center) 230 and also performs a handover operation.

The MSC 230 performs a call connection switching function for processing termination/origination requests directed to the MSs 110, 120 and 130, and also performs a network interworking function associated with other MSCs. A SMS (Short Message Service) center 240 is a single independent node, it is connected to the MSC 230 for recognizing a current location of a receiver user and transmits a SMS message to a subscriber via a PLMN (Public Land Mobile Network). Upon receiving the SMS message from the SMS center 240, the MSC 230 transmits the SMS message to be transmitted to the BSC 220 so that the BTS 210 can transmit the SMS message to a corresponding MS over a paging channel.

For the convenience of description, the core network 200 is comprised of the BTS 210, the NSC 220, the MSC 230, and the SMS center 240 to provide the MS with a mobile communication service. In other words, the core network 200 is the network for providing the MS with the mobile communication service.

If either one of MSs 110, 120 and 130 changes its current status to another status while performing a conference call among the MSs 110, 120 and 130, the changed status information is transmitted to counterpart MSs. In this case, it is preferable for individual MSs to inform their counterpart MSs of the status information during the conference call. The status information may be a call ready state, a call release state, a user's absence state, a call hold state, etc., and may also be applicable to other states. One source MS can communicate with counterpart MSs (also called "destination MSs") in the call ready state whereas it cannot communicate with the counterpart MSs in the call release state. In the case of the user's absence state, the user cannot answer signals of the counterpart MSs even though a traffic channel between the source MS and the counterpart MSs has been provided. In the case of the call hold state, the user cannot transmit his or her voice signal to the counterpart MSs even though it receives voice signals from the counterpart MSs.

In accordance with a preferred embodiment of the present invention, the aforementioned state information generated from the MSs 110, 120 and 130 may be transmitted to a desired destination using the SMS message. In accordance with another preferred embodiment of the present invention, the state information generated from the MSs 110, 120 and 130 may be partially loaded on a predetermine channel message and may be transmitted with the channel message.

In this way, the present invention can transmit state information of one MS to counterpart MSs during a conference call. The MS can determine whether there is a change in state information during the conference call, and can transmit the changed state information to the core network 200. The MS can transmit state information to the core network 200 upon receiving a state information transmission request from a user. The core network 200 transmits the received state information to the counterpart MSs joining in a current conference call mode.

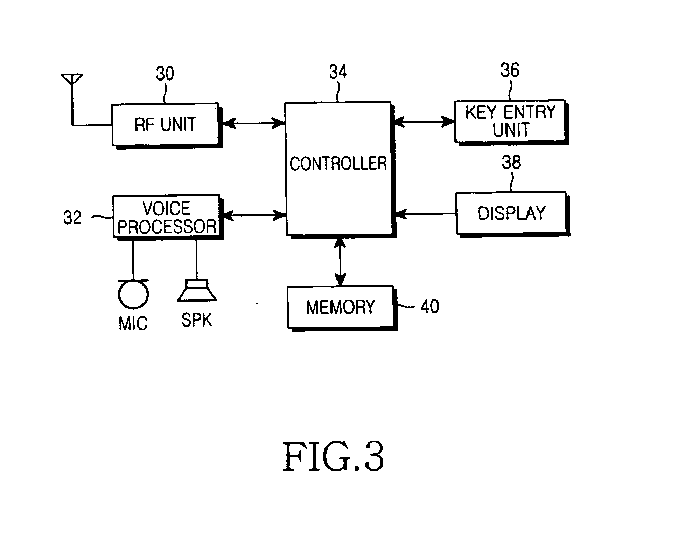

Fig. 3 is a block diagram illustrating the MS in accordance with a preferred embodiment of the present invention. Referring to Fig. 3, the MS includes a RF unit 30, a voice processor 32, a controller 34, a user interface 36, a display 38, and a memory 40. The controller 34 performs overall control operations of the MS. If there arises a predetermined state where the controller 34 must unconditionally inform the counterpart MSs of specific state information during a conference call, then the controller 34 transmits the specific state information to the core network 200. In this case, the controller 34 transmits the state information to the core network 200 along with a caller ID (i.e., a caller's phone number).

"State information" is information associated with a state to be detected by the controller 34. For example, the call hold state, where a user cannot transmit his or her voice signal to counterpart MSs whereas it receives voice signals from the counterpart MSs, can be detected by allowing the user to enter a specific key for blocking voice signal transmission directed to another party, for example, a mute key.

This state information, e.g., a call ready state, a call release state, a user's absence state, a call hold state, etc., may be partially loaded on a predetermined channel message using the SMS message and transmitted to counterpart MSs over the core network 200.

Upon receiving a state information transmission request from the user, the controller 34 transmits state information to the core network 200. In this case, the controller 34 allows the user to pre-register a variety of state information using predetermined menu functions, displays individual state information on the display 38 during the conference call, and transmits selected state information upon receiving the state information from the user. Upon receiving a state information message from the counterpart MSs over the core network 200, the controller 34 outputs the received state information message on the display 38. The controller 34 updates prestored or prerecognized state information of the counterpart MSs according to the received state information.

The controller 34 manages the display 38 used to display caller identifying ID information of conference participants and state information received via the RF unit 30 during the conference call. This enables the user to recognize the conference participants and their state information In the present example, the controller 34 may display information of conference participants, i.e., IDs of individual callers and their associated state information, in the form of a list. The state information may be displayed in the form of a state notification message or an icon. The controller 34 compares caller ID information of conference participants in caller ID information stored in a phone book directory. If the caller ID information is found in the phone book directory, the controller 34 may directs the display 38 to display specific data stored in a phone book directory and associated with the found caller ID.

The RF unit 30 wirelessly transmits or receives voice and text data and control data upon receiving a control signal from the controller 34. Upon receiving a control signal from the controller 34, the voice processor 32 converts audio data received in the RF unit 30 into an audible sound using a speaker, converts a user's voice signal into a digital signal using a microphone so that the digital voice signal is transmitted to the controller 34.

The user interface 36 includes a plurality of numerical keys and a plurality of function keys, it outputs entry data corresponding to the user-selected key signal to the controller 34. The user interface 36 may be configured in the form of a traditional key matrix or a touch screen. If the user interface 36 is implemented through the touch screen, the number keys, the function keys and directional keys contained in the touch screen are freely selected or entered by the user using a variety of entry tools such as a stylus pen, etc.

The display 38 displays a variety of messages upon receiving a control signal from the controller 34. The display 38 may be comprised of an LCD (Liquid Crystal Display), a TFT (Thin Film Transistor), and an Organic EL (Electroluminescence), etc. The memory 40 includes a program memory for storing program data needed to control operations of MSs and a data memory for storing data generated during a control process or other data entered by the user.

If there arises a predetermined state where the controller 34 must unconditionally inform a counterpart MSs of specific state information during a conference call, then the MS transmits state information to the core network 200. Upon receiving a response message to the state information of the counterpart MS from the core network 200, the MS displays the received response message on the display 38.

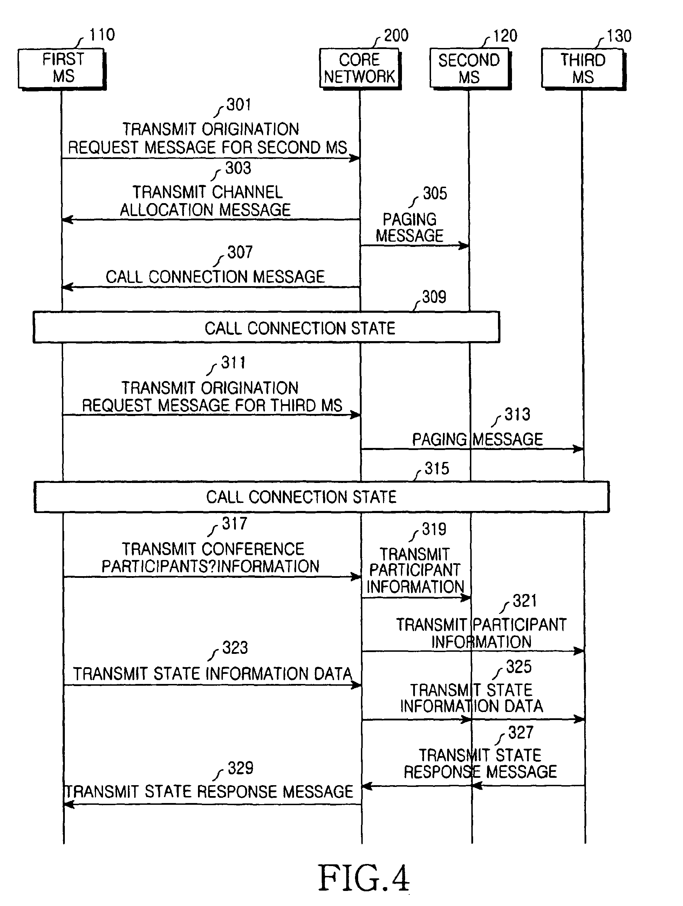

Operations communicated between the core network and the MSs during a video communication time will hereinafter be described with reference to Fig. 4. Fig. 4 is a flow chart illustrating operations communicated by messages sent between the core network and the MSs during a conference call in accordance with a preferred embodiment of the present invention Referring to Fig. 4, a first MS 110 transmits an origination request message associated with a second MS 120 to the core network 200 at step 301. The core network 200 transmits a channel allocation message to the first MS 110 in step 303, so as to create a traffic channel and transmits a paging message to the second MS 120 at step 305. If the second MS 120 answers a termination message transmitted via a paging message, the core network 200 transmits a call connection message to the first MS 110 at step 307, the core network 200 creates a traffic channel between the first MS 110 and the second MS 120 at step 309. In step 311, if the first MS 110 transmits an origination request message associated with the third MS 130 to the core network 200 so as to provide a conference call service, in step 313, the core network 200 transmits a paging message to the third MS 130. If the third MS 130 answers a termination message transmitted via the paging message, on step 315, the core network 200 transmits a call connection message to the first MS 110 and creates a traffic channel among the first MS 110, the second MS 120, and the third MS 130 to provide a conference call service.

Subsequently, in step 317, the first MS 110 transmits conference participants' information to the second and third MSs 120 and 130 joining in the conference call state. In this case, the first MS 110 transmits information about the third MS 130 (e.g., caller ID and state information) to the second MS 120, and transmits information about the second MS 120 (e.g., caller ID and state information) to the third MS 130. The first MS 110 acts as a host MS beginning the conference call operation, such that it contains information of all the MSs joining in the conference call. Therefore, the first MS 110 can easily transmit its known conference participants' information to the other MSs 120 and 130 while forming a traffic channel used for the conference call service. The conference participants' information may be transmitted using the SMS message or may also be partially located on a predetermined channel message. Therefore, the core network 200 transmits the conference participants' information received from the first MS 110 to the second MS 120 and the third MS 130 at steps 319 and 321, respectively.

If there arises a predetermined state where the controller 34 must unconditionally inform the counterpart MSs of specific state information during a conference call, then the controller 34 transmits the specific state information to the core network 200. The core network 200 transmits the received state information of the first MS 110 to the counterpart MSs 120 and 130 at step 325. Upon receiving a state response message from the counterpart MSs 120 and 130 at step 327, the core network 200 transmits the received state response message to the first MS 110. The state information may be a call ready state, a call release state, a user's absence state, a call hold state, etc., and may also be applicable to other states.

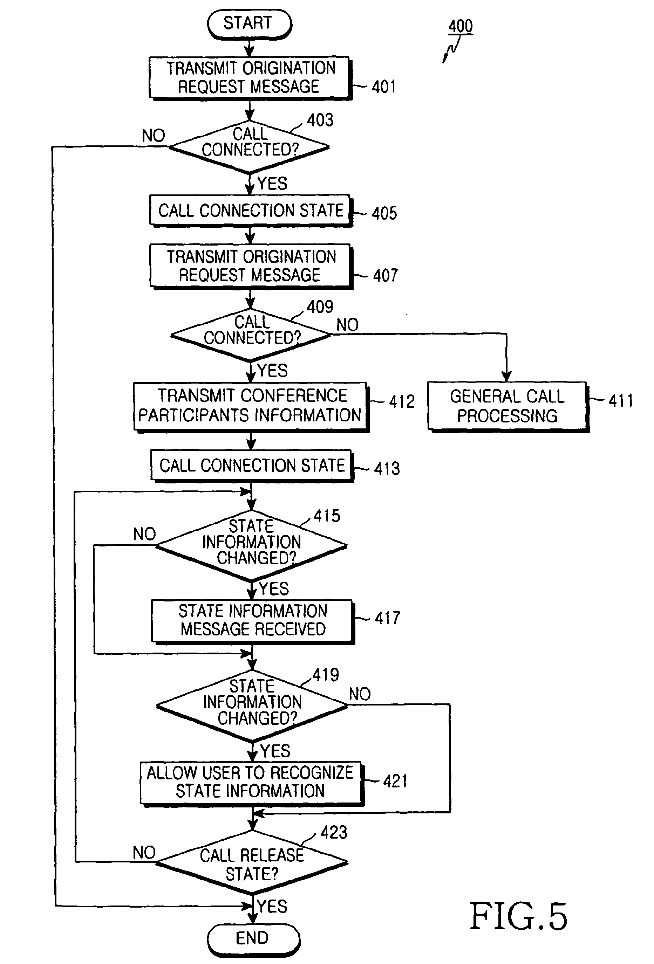

Fig. 5 is a flow chart illustrating control operations 400 of an MS during a conference call in accordance with a preferred embodiment of the present invention. In more detail, control operations of a specific MS acting as a host MS beginning the conference call operation are shown in Fig. 5. Referring to Fig. 5, the controller 34 of the MS transmits an origination request message to the first counterpart MS in step 401, and determines in step 403 whether a call connection state associated with the first counterpart MS is established. If it is determined that the call connection state associated with the first counterpart MS has been established, a call ready state associated with the first counterpart MS is also established at step 405. In step 407, the controller 34 transmits an origination request message to the second counterpart MS to provide a conference call service, and determines in step 409 whether a call connection state associated with the second counterpart MS is established. If it is determined that the call connection state associated with the second counterpart MS has been established. In step 412 the controller 34 transmits information of conference participants to individual MSs joining in the conference call service. In this case, the controller 34 transmits the second counterpart MS's information to the first counterpart MS, and transmits the first counterpart MS's information to the second counterpart MS.

The controller 34 contains information of all the MSs joining in the conference call service in that it has called the first and second counterpart MSs. The first and second counterpart MSs receive information of the host MS at a termination call reception time for the first conference call. Therefore, the controller 34 need not transmit its own information to the counterpart MSs when transmitting conference participants' information to the counterpart MSs, so that individual MSs joining in the conference call service can recognize the conference participants' information. The controller 34 may display information of conference participants, i.e., IDs of individual callers and their associated state information, in the form of a list. The controller 34 searches caller ID information of conference participants in the caller ID information stored in a phone book directory. If the caller ID information is found in the phone book directory, the controller 34 displays not the caller ID but a specific data stored to be associated with the found caller ID.

Although the present invention assumes that the host MS transmits conference participants' information to individual MSs, it should be noted that the core network 200 may transmit the conference participants' information to the MSs at a conference call initiation time.

Referring to Fig. 5, the controller 34 enters a call ready state associated with the counterpart MSs to perform a communication function at step 413. The controller 34 determines in step 415 whether there is provided a predetermined state where the controller must unconditionally inform the counterpart MSs of specific state information during a conference call. If it is determined that the predetermined state has been provided, the controller 34 transmits its own caller ID and state information to the core network 200 at step 417. The controller 34 transmits the state information to the counterpart MSs using an SMS message. Otherwise, the controller 34 loads the state information on a predetermined channel message, and transmits it to the counterpart MSs over the core network 200. The controller 34 determines in step 419 whether the state information message is received from the counterpart MSs. If it is determined that the caller ID and state information messages have been received from the counterpart MSs, the controller 34 updates the counterpart MSs' state information according to reception state information and enables a user to recognize the updated state information of the counterpart MSs at step 421. The controller 34 determines in step 423whether a call release state is established, and repeats steps 415 to 421 until reaching a call release time.

In this way, the host MS acting as a conference initiator MS, forms a conference call mode and transmits conference participants' information to the counterpart MSs. If there is a need for the host MS to transmit the state information, the host MS transmits its own caller ID and state information to individual MSs joining in the conference call mode.

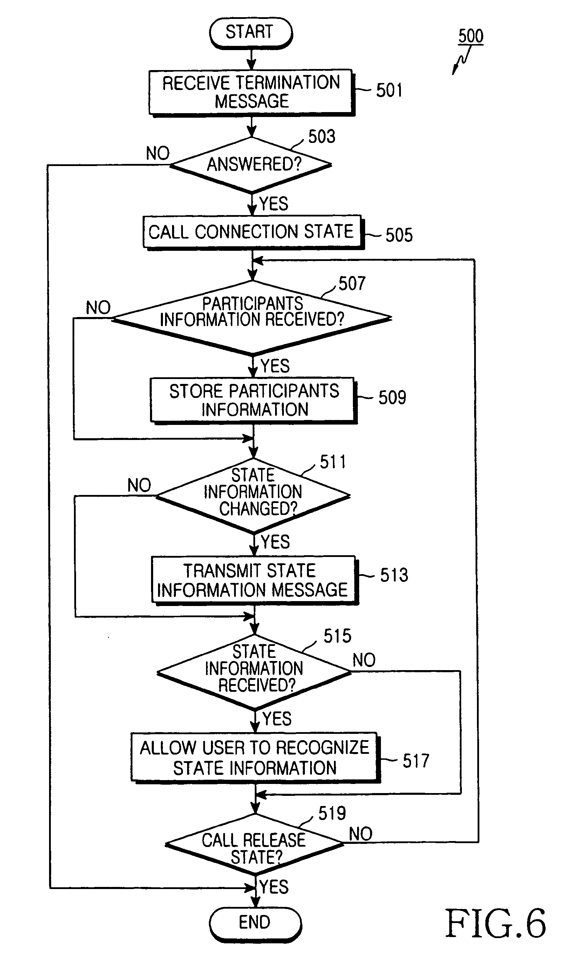

Operations of MSs which answer a conference call request message generated from the host MS so as to provide a conference call service will hereinafter be described with reference to Fig. 6. Fig. 6 is a flow chart illustrating operations of mobile stations during a conference call in accordance with another preferred embodiment of the present invention. In more detail, control operations of the MSs having received the conference call request message from the host computer are shown in Fig. 6.

Referring to Fig. 6, in step 501 the controller 34 of the MS transmits a termination message from the host MS in the conference call mode. In step 503 the controller 34 determines whether the user answers the termination message. If it is determined that the user has pressed a call button to answer the termination message, the controller 34 enters a call ready or connection state at step 505. In step 507 the controller 34 determines whether conference participants' information is received from the host MS. The conference participants' information configured in the form of an SMS message is loaded on a predetermined channel message, and is then received from the core network 200. Upon receiving the conference participants' information from the core network 200, the controller 34 stores the conference participants' information at step 509, and displays the conference participants' information, i.e., IDs of individual callers and their associated state information, in the form of a list. Alternatively, the controller 34 searches caller ID information of the conference participants in caller ID information stored in a phone book directory. If the caller ID information is found in the phone book directory, the controller 34 may direct the display 38 to display specific data stored to be associated with the found caller ID. In this case, the controller 34 displays the host MS's information acquired at a termination call reception time for initiating the conference call service. Needless to say, the controller 34 can identify general information and the conference participants' information.

In step 511 the controller 34 determines whether there is provided a predetermined state where the controller must unconditionally inform the counterpart MS about specific state information during a conference call. If it is determined that the predetermined state has been provided, the controller 34 transmits its own caller ID and state information to the core network 200 at step 513. The controller 34 determines whether the state information message is received from the counterpart MSs at step 515. If it is determined that the caller ID and state information messages have been received from the counterpart MSs, the controller 34 updates the counterpart MSs' state information according to reception state information, and enables a user to recognize the updated state information of the counterpart MSs at step 517. In step 519, the controller 34 determines whether a call release state is established and repeats steps 507 to 517 until reaching a call release time.

As is apparent from the above description, if there arises a predetermined state where the host MS must unconditionally inform the counterpart MSs of specific state information during a conference call, then the host MS transmits caller ID and state information to the counterpart MSs. Upon receiving the caller ID and state information from the counterpart MSs, the host MS displays the received information on its own display so that the user can easily recognize state information of at least one counterpart MS contained in a mobile communication system during a conference call.

For example, although the present invention enables three MSs to join in the conference call service, it should be noted that those skilled in the art can design other application systems to enable more than three MSs to join in the conference call service.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A mobile station apparatus for establishing a conference call mode with a plurality of counterpart mobile stations, the apparatus comprising:
a controller (34) adapted to determine a predetermined state in the conference call, and to transmit specific state information informing about the predetermined state along with caller ID information to all counterpart mobile stations during the conference call using an SMS message such that each of the plurality of counterpart mobile stations receives information about each other of the plurality of counterpart mobile stations, wherein the predetermined state requires that the mobile station must inform at least one of the plurality of counterpart mobile stations of the specific state information; and
a display (38) for displaying messages upon receiving a control signal from the controller,
wherein the controller is adapted to display the caller ID information of the counterpart mobile stations received during the conference call or one of a plurality of names equal to the caller ID information stored in a phone book and corresponding state information on the display, and
wherein the specific state information includes a call ready state associated with the counterpart mobile stations, a call release state associated with the counterpart mobile stations, a user's absence state where the user cannot answer signals of the counterpart mobile stations even though a traffic channel associated with the counterpart mobile stations has been established, and a call hold state where the user cannot transmit his or her voice signal to the counterpart mobile stations even though the mobile station is adapted to receive voice signals from the counterpart mobile stations.

2. The apparatus as set forth in claim 1, wherein the controller is adapted to load the specific state information on some parts of a predetermined channel message, and then to transmit to the counterpart mobile stations.

3. The apparatus as set forth in one of claims 1 or 2, wherein the controller is adapted to pre-register a variety of state information, to display individual state information on the display during the conference call, to determine whether the user selects desired state information, and to transmit the user-desired state information when the user has selected the desired state information.

4. The apparatus as set forth in claim 1, wherein the controller is adapted to update the state information of the counterpart mobile stations according to reception state information.

5. A method for controlling a mobile station which establishes a conference call mode with a plurality of counterpart mobile stations, the method comprising the steps of:
a) determining whether there is provided a predetermined state where the mobile station must unconditionally inform the counterpart mobile stations of specific state information during a conference call; and
b) if it is determined that the predetermined state has been provided, transmitting the specific state information along with caller ID information to all counterpart mobile stations using an SMS message such that each of the plurality of counterpart mobile stations receives information about each other of the plurality of counterpart mobile stations,
wherein the caller ID information of the counterpart mobile stations received during the conference call or one of a plurality of names equal to the caller ID information stored in a phone book and corresponding state information on the display are displayed on a display, and
wherein the specific state information includes a call ready state associated with the counterpart mobile stations, a call release state associated with the counterpart mobile stations, a user's absence state where the user cannot answer signals of the counterpart mobile stations even though a traffic channel associated with the counterpart mobile stations has been established, and a call hold state where the user cannot transmit his or her voice signal to the counterpart mobile stations even though the mobile station is adapted to receive voice signals from the counterpart mobile stations.

6. The method as set forth in claim 5, wherein the specific state information is loaded on some parts of a predetermined channel message, and is then transmitted to the counterpart mobile stations.

7. The method as set forth in one of claims 5 or 6, further comprising the steps of:
c) pre-registering a variety of state information, and displaying individual state information on a display during the conference call; and
d) if it is determined that the user has selected desired state information, transmitting the user-desired state information.

8. The method as set forth in claim 7, further comprising the step of:
e) updating the state information of the counterpart mobile stations according to reception state information.

## Patentansprüche

1. Mobilstation-Vorrichtung zum Herstellen eines Telefonkonferenz-Betriebes mit einer Vielzahl von Gegenstellen, wobei die Vorrichtung umfasst:
eine Steuereinrichtung (34), die eingerichtet ist, um einen vorbestimmten Zustand in der Telefonkonferenz festzustellen, und um spezifische Zustandsinformationen, die über den vorbestimmten Zustand informieren zusammen mit Anruferidentifizierungsinformationen zu allen Gegenstellen während der Telefonkonferenz unter Verwendung einer SMS Nachricht zu übertragen, so dass jede der Vielzahl von Gegenstellen Informationen über jede andere der Vielzahl von Gegenstellen empfängt, wobei der vorbestimmte Zustand erfordert, dass die Mobilstation mindestens eine der Vielzahl von Gegenstellen über die spezifische Zustandsinformation informiert; und
eine Anzeigevorrichtung (38) zum Anzeigen von Nachrichten nach dem Empfangen eines Steuerungssignals von der Steuereinrichtung,
wobei die Steuereinrichtung eingerichtet ist, um die Anrufidentifizierungsinformation der Gegenstellen, die während der Telefonkonferenz empfangen wurde, oder einer von einer Vielzahl von Namen, die der Anrufidentifizierungsinformation entspricht, die in einem Telefonbuch gespeichert sind und entsprechende Zustandsinformationen auf der Anzeige, anzuzeigen, und
wobei die spezifische Zustandsinformation einen Anrufbereitschaftszustand, der mit den Gegenstellen verknüpft ist, einen Rufauslösungszustand, der mit den Gegenstellen verknüpft ist, einen Benutzerabwesenheitszustand, bei dem der Benutzer Signale der Gegenstellen nicht beantworten kann, obwohl ein Verkehrskanal, der mit den Gegenstellen verknüpft ist, hergestellt wurde, und einen Anruf-Halten-Zustand umfasst, bei dem der Benutzer sein Sprachsignal nicht zu den Gegenstellen übertragen kann, obwohl die Mobilstation eingerichtet ist, um Sprachsignale von den Gegenstellen zu empfangen, umfasst.

2. Vorrichtung gemäß Anspruch 1, wobei die Steuereinrichtung eingerichtet ist, um die bestimmte Zustandsinformation auf einige Teile einer vorbestimmten Kanalnachricht zu laden, und dann zu den Gegenstellen zu übertragen.

3. Vorrichtung gemäß einem der Ansprüche 1 oder 2, wobei die Steuereinrichtung eingerichtet ist, um eine Vielzahl von Zustandsinformationen vorzuregistrieren, um individuelle Zustandsinformationen auf der Anzeigevorrichtung während der Telefonkonferenz anzuzeigen, um festzustellen, ob der Benutzer gewünschte Zustandsinformationen auswählt, und um die benutzergewünschten Zustandsinformationen zu übertragen wenn der Benutzer die gewünschte Zustandsinformation ausgewählt hat.

4. Vorrichtung gemäß Anspruch 1, wobei die Steuereinrichtung eingerichtet ist, um die Zustandsinformation der Gegenstellen gemäß Empfangszustandsinformationen zu aktualisieren.

5. Verfahren zum Steuern einer Mobilstation, die einen Telefonkonferenzbetrieb mit einer Vielzahl von Gegenstellen herstellt, wobei das Verfahren die Schritte umfasst:
a) Feststellen, ob ein vorbestimmter Zustand gegeben ist, in dem die Mobilstation die Gegenstellen über spezifische Zustandsinformationen während einer Telefonkonferenz unbedingt informieren muss; und
b) wenn festgestellt wird, dass der vorbestimmte Zustand gegeben ist, Übertragen der spezifischen Zustandsinformation zusammen mit Anruferidentifizierungsinformationen zu allen Gegenstellen unter Verwendung einer SMS-Nachricht, so dass jede der Vielzahl von Gegenstellen Informationen über jede andere der Vielzahl von Gegenstellen empfängt,
wobei die Anruferidentifizierungsinformation der Gegenstellen, die während der Teiefonkonferenz empfangen wurde, oder einer einer Vielzahl von Namen, der der Anruferidentifizierungsinformation entspricht, die in einem Telefonbuch gespeichert sind, und entsprechende Zustandsinformationen über die Anzeigevorrichtung auf einer Anzeigevorrichtung angezeigt werden, und
wobei die spezifische Zustandsinformation einen Anrufbereitschaftszustand, der mit den Gegenstellen verknüpft ist, einen Rufauslösungszustand, der mit den Gegenstellen verknüpft ist, einen Benutzerabwesenheitszustand, bei dem der Benutzer Signale der Gegenstellen nicht beantworten kann, obwohl ein Verkehrskanal, der mit den Gegenstellen
verknüpft ist, hergestellt wurde, und einen Anruf-Halten-Zustand, bei dem der Benutzer seine Sprachsignale nicht zu den Gegenstellen übertragen kann, obwohl die Mobilstation eingerichtet ist, um Sprachsignal von den Gegenstellen zu empfangen, umfasst.

6. Verfahren gemäß Anspruch 5, wobei die spezifische Zustandsinformation auf Teile einer vorbestimmten Kanalnachricht geladen wird, und dann zu den Gegenstellen übertragen wird.

7. Verfahren gemäß einem der Ansprüche 5 oder 6, des Weiteren umfassend:
c) Vorregistrieren einer Vielzahl von Zustandsinformationen und Anzeigen von individuellen Zustandsinformationen auf einer Anzeigevorrichtung während der Telefonkonferenz; und
d) Übertragen der benutzergewünschten Zustandsinformation, wenn festgestellt wird, dass der Benutzer eine erwünschte Zustandsinformation ausgewählt hat.

8. Verfahren gemäß Anspruch 7, des Weiteren umfassend:
e) Aktualisieren der Zustandsinformation der Gegenstellen gemäß Empfangszustandsinformationen.

## Revendications

1. Dispositif station mobile pour établir un mode d'appel conférence avec une pluralité de stations mobiles homologues, le dispositif comprenant :
un contrôleur (34) adapté à déterminer un état prédéterminé dans l'appel conférence et à transmettre des informations d'état spécifiques informant de l'état prédéterminé ainsi que des informations d'identifiant de demandeur à toutes les stations mobiles homologues pendant l'appel conférence en utilisant un message SMS, de telle sorte que chaque station de la pluralité de stations mobiles homologues reçoive des informations concernant chaque autre station de la pluralité de stations mobiles homologues, dans lequel l'état prédéterminé nécessite que la station mobile doit informer au moins une station de la pluralité de stations mobiles homologues des informations d'état spécifiques ; et
un dispositif d'affichage (38) pour afficher des messages lors de la réception d'un signal de commande provenant du contrôleur,
dans lequel le contrôleur est adapté à afficher les informations d'identifiant de demandeur des stations mobiles homologues reçues pendant l'appel conférence ou d'un ou d'une pluralité de noms égaux aux informations d'identifiant de demandeur enregistrées dans un répertoire téléphonique et aux informations d'état correspondantes sur le dispositif d'affichage, et
dans lequel les informations d'état spécifiques comportent un état prêt pour appel associé aux stations mobiles homologues, un état de libération d'appel associé aux stations mobiles homologues, un état d'absence de l'utilisateur lorsque l'utilisateur ne peut pas répondre aux signaux des stations mobiles homologues, même si une voie de trafic associée aux
stations mobiles homologues a été établie et un état de mise en attente d'appel lorsque l'utilisateur ne peut pas transmettre son signal vocal aux stations mobiles homologues, même si la station mobile est adaptée à recevoir des signaux vocaux des stations mobiles homologues.

2. Dispositif selon la revendication 1, dans lequel le contrôleur est adapté à charger les informations d'état spécifiques sur certaines parties d'un message de voie prédéterminé, puis à les transmettre aux stations mobiles homologues.

3. Dispositif selon l'une des revendications 1 ou 2, dans lequel le contrôleur est adapté à préenregistrer une diversité d'informations d'état, pour afficher les informations d'état individuelles sur le dispositif d'affichage pendant l'appel conférence, pour déterminer si l'utilisateur sélectionne des informations d'état désirées et à transmettre les informations d'état désirées par l'utilisateur lorsque l'utilisateur a sélectionné les informations d'état désirées.

4. Dispositif selon la revendication 1, dans lequel le contrôleur est adapté à mettre à jour les informations d'état des stations mobiles homologues conformément aux informations d'état de réception.

5. Procédé de commande d'une station mobile qui établit un mode d'appel conférence avec une pluralité de stations mobiles homologues, le procédé comprenant les étapes consistant à :
a) déterminer s'il est fourni un état prédéterminé lorsque la station mobile doit informer sans condition les stations mobiles homologues d'informations d'état spécifiques pendant un appel conférence ; et
b) s'il a été déterminé que l'état prédéterminé a été fourni, transmettre les informations d'état spécifiques ainsi que des informations d'identifiant de demandeur à toutes les stations mobiles homologues en utilisant un message SMS, de telle sorte que chaque station de la pluralité de stations mobiles homologues reçoive des informations concernant chaque autre station de la pluralité de stations mobiles homologues,
dans lequel les informations d'identifiant de demandeur des stations mobiles homologues reçues pendant l'appel conférence ou un ou une pluralité de noms égaux aux informations d'identifiant de demandeur enregistrés dans un répertoire téléphonique et les informations d'état correspondantes sur le dispositif d'affichage, sont affichées sur un dispositif d'affichage, et
dans lequel les informations d'état spécifiques comportent un état prêt pour appel associé aux stations mobiles homologues, un état de libération d'appel associé aux stations mobiles homologues, un état d'absence de l'utilisateur lorsque l'utilisateur ne peut pas répondre aux signaux des stations mobiles homologues, même si une voie de trafic associée aux stations mobiles homologues a été établie et un état de mise en attente d'appel lorsque l'utilisateur ne peut pas transmettre son signal vocal aux stations mobiles homologues, même si la station mobile est adaptée à recevoir des signaux vocaux des stations mobiles homologues.

6. Procédé selon la revendication 5, dans lequel les informations d'état spécifiques sont chargées sur certaines parties d'un message de voie prédéterminé, et sont ensuite transmises aux stations mobiles homologues.

7. Procédé selon l'une des revendications 5 ou 6, comprenant en outre les étapes consistant à :
c) préenregistrer une diversité d'informations d'état et afficher les informations d'état individuelles sur un dispositif d'affichage pendant l'appel conférence ; et
d) s'il a été déterminé que l'utilisateur a sélectionné des informations d'état désirées, transmettre les informations d'état désirées par l'utilisateur.

8. Procédé selon la revendication 7, comprenant en outre l'étape consistant à :
e) mettre à jour les informations d'état des stations mobiles homologues conformément aux informations d'état de réception.
